# DEMANDE DE BREVET EUROPEEN

(11) **EP 4 557 020 A1**
(43) Date de publication de la demande: **21.05.2025**
(21) Numéro de dépôt: 23210963.7
(22) Date de dépôt: 20.11.2023
(51) Int. Cl.: G04D 7/10, G04B 17/06

(54) **PROCÉDÉ DE FABRICATION D'UN OSCILLATEUR BALANCIER-SPIRAL POUR SPIRAUX À FORTE VARIATION DE COUPLE**

(71) Demandeur: Nivarox-FAR S.A., 2400 Le Locle (CH)
(72) Inventeur: VERARDO, Marco, 2336 Les Bois (CH); JEANNERET, Laurent, 25130 Villers-le-Lac (FR)
(74) Mandataire: ICB SA

(57) **Abrégé**

L'invention concerne un procédé de fabrication d'un oscillateur (1) pour pièce d'horlogerie réalisé à partir d'un balancier (2) et d'un ressort spiral (3), le procédé comprenant les étapes suivantes :
- mesurer le moment d'inertie moyen d'un lot de balanciers (2) ;
- fournir des ressorts spiraux (3) virolés, les ressorts spiraux (3) présentant un surplus de de nombre de spires formant jusque trois tours supplémentaires par rapport au nombre de spires final ;
- effectuer une première coupe extérieure prédéterminée des ressorts spiraux (3) sur une longueur d'une à deux spires puis mesurer le couple des ressorts spiraux (3) et les trier en fonction de la valeur du couple mesurée ;
- assembler les ressorts spiraux (3) dont le couple mesuré correspond aux balanciers (2) pour former un oscillateur d'une fréquence intermédiaire et déterminer la longueur à couper pour atteindre une fréquence d'oscillation souhaitée ;
- effectuer une seconde coupe extérieure des ressorts spiraux (3) sélectionnés pour atteindre à la fois la fréquence d'oscillation souhaitée, et atteindre une valeur cible pour obtenir un angle (α) de point d'attache (6) à +/- 50° de la valeur théorique.

## Description

### Domaine technique de l'invention

L'invention se rapporte au domaine technique général des oscillateurs mécaniques, utilisés notamment dans l'horlogerie. Plus particulièrement, l'invention concerne un procédé de fabrication d'oscillateurs comportant un ressort spiral et un balancier.

### Arrière-plan technologique

Malgré l'extrême précision des usinages et leur grande reproductibilité, des ajustements doivent presque toujours être opérés, soit lors d'une opération d'assemblage, soit, plus fréquemment, lors d'une opération de réglage ou de mise au point, en particulier pour un réglage de balourd et un ajustement d'inertie dans le cas des pièces mobiles, et un réglage de fréquence dans le cas d'un oscillateur.

C'est en particulier au stade assemblé qu'il est nécessaire de parfaire l'appairage de certains composants qui, pris indépendamment, sont dans les tolérances d'usinage ou de réalisation, mais qui ne peuvent être assemblés purement et simplement en raison des contraintes de service propre au sous-ensemble ou à l'ensemble monté.

C'est en particulier le cas des organes réglants des pièces d'horlogerie, et tout particulièrement des ensembles balancier-spiral. Il apparaît en effet que les réglages de balourd et d'ajustement d'inertie, tant statique que dynamique, sont déjà très délicats au stade des composants individuels, et que ces opérations de mise au point se révèlent extrêmement complexes quand les composants sont assemblés. En particulier les réglages dynamiques se révèlent délicats à mettre en oeuvre. Pour l'ajustement d'un sous-ensemble balancier-spiral, on connaît différentes techniques, dont deux sont plus couramment appliquées.

Le système « Omégamétrique » consiste à effectuer :
- un classage des spiraux déjà coupés au bon point d'attache selon leur couple ;
- un classage des balanciers selon leur inertie ;
- un appairage d'un balancier choisi dans une classe particulière, avec un spiral choisi lui aussi dans une classe particulière, ces classes étant compatibles entre elles pour atteindre la précision de fréquence choisie.

Ce procédé impose un important stock des composants et de nombreuses contraintes logistiques.

En alternative on connaît le système « Spiromatic » :
- on assemble en général un spiral virolé sur un balancier ;
- on coupe ce spiral à la longueur qui permet d'obtenir un couple adapté à l'inertie du balancier. Avec une bonne maîtrise des dispersions d'inertie des balanciers et de couple des spiraux, ce point de coupe se trouve dans une tolérance maximum de +/- 50° autour de la valeur cible théorique.

Ce procédé ne permet pas de garantir une grande précision du point d'attache du ressort spiral par rapport à la sortie de la virole, ce qui peut avoir pour conséquence une perte de performance chronométrique. Ceci est particulièrement vrai lorsque les spiraux présentent une large distribution de couple nominal.

La première technique est très coûteuse, et la seconde technique est médiocre en performance chronométrique. Par ailleurs, elles ne sont pas ou mal adaptées lorsqu'une très forte variation des couples des spiraux est présente à l'issue du procédé de fabrication, cela rend l'association à un balancier et les réglages difficiles, et se ressent sur les performances chronométriques de l'oscillateur qui sont généralement médiocres.

### Résumé de l'invention

L'invention a notamment pour objectif de proposer une méthode économique pour l'assemblage d'un oscillateur.

Plus précisément, un objectif de l'invention est de proposer un procédé de fabrication d'un oscillateur comportant un ressort spiral et un balancier et consistant à avoir un procédé économique malgré la grande dispersion de couple des spiraux.

A cet effet, l'invention concerne un procédé de fabrication d'un oscillateur pour pièce d'horlogerie réalisé à partir d'un balancier et d'un ressort spiral, le procédé comprenant les étapes suivantes :
- mesurer le moment d'inertie moyen d'un lot de balanciers ;
- fournir des spiraux virolés, les spiraux présentant un surplus de nombre de spires formant jusque trois tours supplémentaires par rapport au nombre de spires finales ;
- effectuer une première coupe extérieure prédéterminée des spiraux avec un surplus défini d'une longueur d'une à deux spires puis mesurer le couple des spiraux et les trier en fonction de la valeur du couple mesurée ;
- assembler les ressorts spiraux dont le couple mesuré correspond aux balanciers pour former un oscillateur d'une fréquence intermédiaire ;
- effectuer une seconde coupe extérieure des ressorts spiraux sélectionnés pour atteindre à la fois la fréquence d'oscillation souhaitée, et atteindre une valeur cible pour obtenir un angle de point d'attache à +/- 50° de la valeur théorique.

Conformément à d'autres variantes avantageuses de l'invention :
- les ressorts spiraux sont élaborés à partir d'une ébauche dans un métal ou alliage métallique ;
- l'ébauche est recouverte d'une couche superficielle d'un matériau ductile ;
- le métal ou l'alliage métallique est choisi parmi le titane, le niobium, le zirconium ou une combinaison de ces métaux ;
- les ressorts spiraux sont mise en forme via une étape de tréfilage et/ou laminage de l'ébauche alternée avec au moins une étape de traitement thermique, une étape d'estrapadage pour former le ressort spiral étant effectuée avant la dernière étape de traitement thermique ;
- la couche superficielle ductile est retirée après le laminage, et avant l'estrapadage.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente un spiral virolé avec un surplus de nombre de spires ;
- la figure 2 représente un spiral virolé ayant subi une première coupe extérieure d'une à deux spires ;

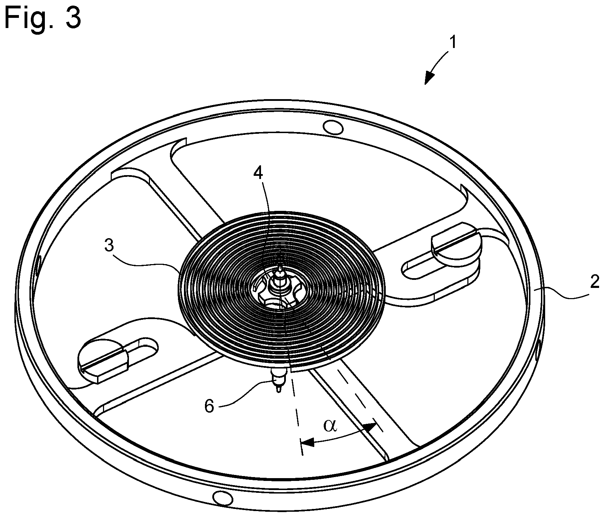

- la figure 3 représente schématiquement un oscillateur obtenu via le procédé de fabrication selon l'invention.

### Description détaillée de l'invention

L'invention concerne un procédé de fabrication d'un oscillateur 1 destiné à équiper un mouvement d'horlogerie.

Par fabrication, il convient d'entendre au sens large des étapes de fabrication de parties de l'oscillateur 1 ainsi que des étapes d'assemblage de parties de l'oscillateur 1.

Lors de la première étape, on prélève un lot de balanciers 2 parmi une production, le lot de balanciers 2 étant obtenu via un procédé permettant d'obtenir une inertie déterminée des balanciers. L'inertie moyenne du lot de balancier 2 est mesurée pour s'assurer qu'il n'y a pas une dispersion trop grande au sein du lot, les éventuels balanciers présentant une inertie trop éloignée étant écartés du lot.

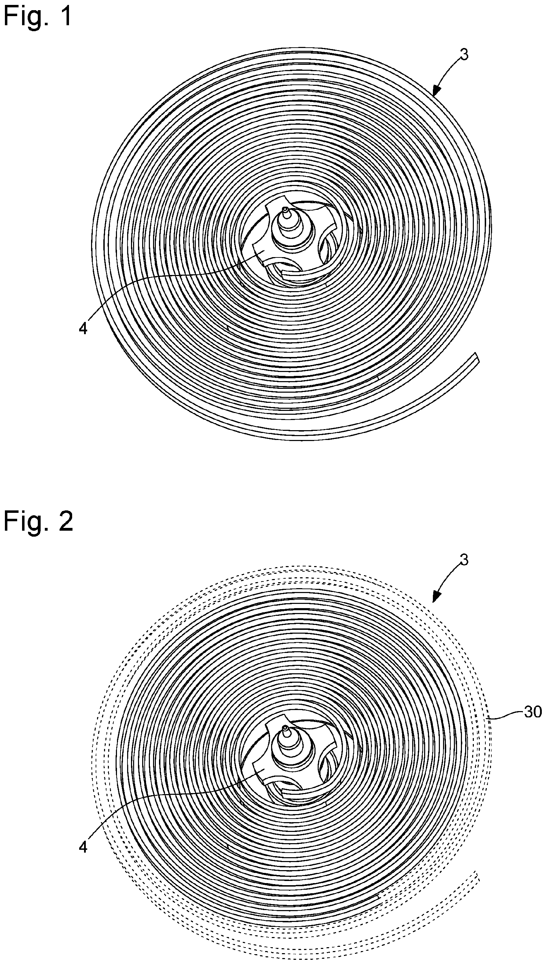

Lors de la deuxième étape, des ressorts spiraux 3 virolés sont fournis, ces derniers présentant un surplus de nombre de spires formant jusqu'à trois spires supplémentaires, comme illustré à la figure 1. Un tel surplus de nombre de spires permet de pouvoir raccourcir les ressorts spiraux ultérieurement dans le cadre d'un réglage.

Pour réaliser ces ressorts spiraux, on utilise une ébauche formée dans un métal ou un alliage métallique.

Ensuite, on dépose, sur l'ébauche en alliage, une couche superficielle d'un matériau ductile pour faciliter la mise en forme sous forme de fil. Une telle épaisseur de matériau ductile permet d'étirer, de tréfiler et de laminer aisément l'ébauche.

Enfin, pour mettre en forme les ressorts spiraux 3, l'ébauche recouverte de la couche superficielle ductile est déformée via un tréfilage puis un laminage, puis subit au moins une étape de traitement thermique, et finalement une étape d'estrapadage est effectuée pour former les ressorts spiraux 3.

Une étape de déformation désigne d'une manière globale un ou plusieurs traitements de déformation, qui peuvent comprendre le tréfilage et/ou le laminage. Le tréfilage peut nécessiter l'utilisation d'une ou plusieurs filières lors de la même étape de déformation ou lors de différentes étapes de déformation si nécessaire. Le tréfilage est réalisé jusqu'à l'obtention d'un fil de section ronde. Le laminage peut être effectué lors de la même étape de déformation que le tréfilage ou dans une autre étape de déformation ultérieure. Avantageusement, le dernier traitement de déformation appliqué à l'alliage est un laminage, de préférence à profil rectangulaire compatible avec la section d'entrée d'une broche d'estrapadage.

L'apport de matériau ductile peut être galvanique, PVD ou CVD, ou bien mécanique, on obtient alors une chemise ou un tube de matériau ductile qui est ajusté sur l'ébauche d'alliage, puis qui est amincie au cours de la ou des étapes de déformation de l'ébauche.

Le matériau ductile est éliminé une fois toutes les opérations de traitement de déformation effectuées, c'est-à-dire après le dernier laminage, et avant l'estrapadage. Le fil est, par exemple, débarrassé de sa couche de matériau ductile, par attaque chimique, avec une solution à base d'acides par exemple.

A l'issue de ces étapes, on obtient des ressorts spiraux 3 présentant un surplus de longueur extérieure d'au moins trois spires, avec une âme en alliage et une enveloppe en matériau ductile.

Les ressorts spiraux 3 obtenus présentent alors une section qui est variable. En effet, la régularité du fil formant le ressort spiral n'est pas uniforme car l'alliage ne se déforme pas aussi facilement que le cuivre et par conséquent la section du fil est amenée à varier suite aux différentes étapes de déformations. Il y a donc une forte variabilité de couple parmi les ressorts spiraux 3 produits et le système « Spiromatic » n'est pas envisageable ou utilisable dans un tel cas.

Le procédé selon l'invention comprend une troisième étape au cours de laquelle une première coupe extérieure 30 est réalisée pour obtenir un ressort spiral 3 prédécoupé, comme illustré à la figure 2. La longueur de la coupe extérieure 30 est effectuée sur une ou deux spires de manière qu'il reste un surplus de longueur sur le ressort spiral 3 pour effectuer une seconde coupe ultérieure lors du réglage du ressort spiral 3 sur le balancier 2.

Ensuite, lors de la quatrième étape, le couple des ressorts spiraux 3 est mesuré, et les ressorts spiraux 3 sont triés en fonction de la valeur du couple mesurée pour former des lots de spiraux ayant un couple mesuré similaire.

Lors de la cinquième étape, on assemble les ressorts spiraux 3 dont le couple mesuré correspond à l'inertie des balanciers 2 pour former un oscillateur d'une fréquence intermédiaire et déterminer la longueur à couper pour atteindre une fréquence d'oscillation souhaitée.

Ensuite, lors de la sixième étape, on effectue une seconde coupe extérieure du ressort spiral 3 sélectionné pour atteindre à la fois la fréquence d'oscillation souhaitée, et à atteindre une valeur cible pour l'angle α formé par le point d'attache 6 du ressort spiral 3 à un piton et la sortie 5 de la virole 4 après la seconde coupe extérieure, avec une tolérance de plus ou moins 50° de la valeur théorique. La valeur théorique est définie de manière à pouvoir respecter les exigences du produit une fois la courbe formée.

Ainsi, un tel procédé permet d'associer un lot de spiraux de manière à ce que tous les spiraux de ce lot puissent être appairés au lot de balanciers en respectant la tolérance de +/- 50°.

Le procédé de l'invention permet ainsi de disposer d'un ensemble balancier-spiral accordé à une fréquence particulière, avec une bonne fiabilité et une bonne précision.

## Revendications

1. Procédé de fabrication d'un oscillateur (1) pour pièce d'horlogerie réalisé à partir d'un balancier (2) et d'un ressort spiral (3), **caractérisé en ce qu'**il comprend les étapes suivantes :
- mesurer le moment d'inertie moyen d'un lot de balanciers (2) ;
- fournir des ressorts spiraux (3) virolés, les ressorts spiraux (3) présentant un surplus de nombre de spires formant jusque trois tours supplémentaires par rapport au nombre de spires final ;
- effectuer une première coupe extérieure prédéterminée des ressorts spiraux (3) avec un surplus défini d'une longueur d'une à deux spires puis mesurer le couple des ressorts spiraux (3) et les trier en fonction de la valeur du couple mesurée ;
- assembler les ressorts spiraux (3) dont le couple mesuré correspond aux balanciers (2) pour former un oscillateur d'une fréquence intermédiaire ;
- effectuer une seconde coupe extérieure des ressorts spiraux (3) sélectionnés pour atteindre à la fois la fréquence d'oscillation souhaitée, et atteindre une valeur cible pour obtenir un angle (α) de point d'attache (6) à +/- 50° de la valeur théorique.

2. Procédé de fabrication selon la revendication 1, **caractérisé en ce que** les ressorts spiraux (3) sont élaborés à partir d'une ébauche dans un métal ou un alliage métallique.

3. Procédé de fabrication selon la revendication 2, **caractérisé en ce que** l'ébauche est recouverte d'une couche superficielle d'un matériau ductile.

4. Procédé de fabrication selon la revendication 2, **caractérisé en ce que** le métal ou l'alliage métallique est choisi parmi le titane, le niobium, le zirconium ou une combinaison de ces métaux.

5. Procédé de fabrication selon l'une des revendications 1 à 4, dans lequel les ressorts spiraux (3) sont mis en forme via une étape de tréfilage et/ou laminage de l'ébauche alternée avec au moins une étape de traitement thermique, une étape d'estrapadage pour former le ressort spiral étant effectuée avant la dernière étape de traitement thermique.

6. Procédé de fabrication selon la revendication 3, **caractérisé en ce que** la couche superficielle ductile est retirée après le laminage, et avant l'estrapadage.
